# DEMANDE DE BREVET EUROPEEN

(11) **EP 4 843 457 A1**
(43) Date de publication de la demande: **25.11.2026**
(21) Numéro de dépôt: 25178173.8
(22) Date de dépôt: 22.05.2025
(51) Int. Cl.: A47J 37/06, A47J 45/07

(54) **USTENSILE DE CUISSON POUR UN APPAREIL DE PREPARATION CULINAIRE**

(71) Demandeur: SEB S.A., 69130 Ecully (FR)
(72) Inventeur: FRADET, Gautier, 69134 ECULLY CEDEX (FR); DUSSART, Marie, 69134 ECULLY CEDEX (FR); PETITALLOT, Johann, 69134 ECULLY CEDEX (FR); PRIETO, Guillaume, 69134 ECULLY CEDEX (FR); SEURAT, Frédéric, 69134 ECULLY CEDEX (FR)
(74) Mandataire: SEB Développement

(57) **Abrégé**

Ustensile de cuisson pour un appareil de préparation culinaire, comprenant:
- une cuve de cuisson (10), ,
- une interface de préhension (20), agencée pour être fixée de manière réversible sur la cuve de cuisson (10),
- un mécanisme de fixation, comprenant au moins :
. une fixation supérieure de cuve (15), ,
. une fixation supérieure de préhension (25),
caractérisé en ce que la fixation supérieure de cuve (15) et la fixation supérieure de préhension (25) sont agencées pour imposer :
. un mouvement de désaccouplement de la fixation supérieure de préhension (25) présentant une composante de déplacement de désaccouplement dirigée vers le bas, et/ou
. un mouvement d'accouplement de la fixation supérieure de préhension (25) présentant une composante de déplacement d'accouplement dirigée vers le haut de la cuve de cuisson (10).

## Description

### Domaine technique de l'invention

La présente invention concerne de manière générale un ustensile de cuisson pour un appareil de préparation culinaire. En particulier, l'invention se rapporte à un ustensile de cuisson comprenant une cuve de cuisson pouvant être reçu dans un espace de cuisson d'un appareil de préparation culinaire, et comprenant des moyens de préhension prévus pour faciliter la manipulation de la cuve de cuisson.

### État de la technique

Il est connu dans l'art antérieur des appareils de préparation culinaire de prévoir une cuve de cuisson amovible par rapport à un appareil de préparation culinaire, et d'équiper la cuve de cuisson avec une interface de préhension. Une telle interface de préhension peut être prévue amovible par rapport à la cuve de cuisson pour par exemple faciliter le nettoyage. En contrepartie, ce système peut présenter des inconvénients liés à la sécurité d'utilisation. En effet, il est important de prévenir tout risque de détachement intempestif entre la cuve de cuisson et l'interface de préhension, en particulier si la cuve de cuisson vient d'être retirée de l'appareil de préparation culinaire et contient des aliments chauds. Cependant, il faut en même temps proposer une utilisation ergonomique et simple pour détacher rapidement la cuve de cuisson de l'interface de préhension, pour ne pas affecter ou compliquer l'expérience utilisateur.

### Exposé de l'invention

Un but de la présente invention est de répondre aux inconvénients de l'art antérieur mentionnés ci-dessus et en particulier, tout d'abord, de proposer un ustensile de cuisson comprenant une cuve de cuisson et une interface de préhension amovible par rapport à la cuve de cuisson dont l'utilisation est sécurisée en empêchant un détachement intempestif entre la cuve de cuisson et l'interface de préhension, tout en proposant une utilisation ergonomique et simple pour détacher rapidement la cuve de cuisson de l'interface de préhension.

Pour cela un premier aspect de l'invention concerne un ustensile de cuisson pour un appareil de préparation culinaire, comprenant au moins :
- une cuve de cuisson, agencée pour recevoir des aliments à préparer et agencée pour être reçue dans un espace de cuisson interne de l'appareil de préparation culinaire,
- une interface de préhension, agencée pour être fixée de manière réversible sur la cuve de cuisson,
- un mécanisme de fixation, comprenant au moins :
   . une fixation supérieure de cuve, embarquée sur la cuve de cuisson et agencée sur une partie supérieure de la cuve de cuisson,
   . une fixation supérieure de préhension, embarquée sur l'interface de préhension et agencée pour s'accoupler de manière réversible avec la fixation supérieure de cuve,
- des moyens de cuisson comprenant des moyens de chauffage disposés entre un organe de ventilation et l'espace de cuisson caractérisé en ce que la fixation supérieure de cuve et la fixation supérieure de préhension sont agencées pour imposer :
   . un mouvement de désaccouplement de la fixation supérieure de préhension présentant une composante de déplacement de désaccouplement dirigée vers le bas de la cuve de cuisson, et/ou
   . un mouvement d'accouplement de la fixation supérieure de préhension présentant une composante de déplacement d'accouplement dirigée vers le haut de la cuve de cuisson.

L'ustensile de cuisson comprend un mécanisme de fixation avec une fixation supérieure de cuve et une fixation supérieure de préhension qui sont prévues pour imposer un mouvement de désaccouplement de la fixation supérieure de préhension présentant une composante de déplacement de désaccouplement dirigée vers le bas de la cuve de cuisson et/ou un mouvement d'accouplement de la fixation supérieure de préhension présentant une composante de déplacement d'accouplement dirigée vers le haut de la cuve de cuisson. En conséquence, la fixation supérieure de préhension doit être déplacée relativement vers le bas par rapport à la cuve de cuisson pour en être désaccouplée, si bien que lorsque l'utilisateur manipule l'ustensile de cuisson (cuve de cuisson et interface de préhension accouplées), le poids de la cuve de cuisson et des aliments qu'elle contient empêche tout mouvement de désaccouplement intempestif. Autrement dit, la fixation supérieure de préhension est prévue pour reprendre le poids de la cuve de cuisson via la fixation supérieure de cuve. Pour désaccoupler la cuve de cuisson de l'interface de préhension, il faut faire une action spécifique de reprendre le poids de la cuve de cuisson : soit poser cette dernière sur un support, soit tenir directement la cuve de cuisson, et ensuite tirer / déplacer vers le bas l'interface de préhension.

Selon la mise en œuvre ci-dessus, la fixation supérieure de préhension est agencée pour supporter la fixation supérieure de cuve (et donc la cuve de cuisson), et en particulier, la fixation supérieure de préhension est agencée pour maintenir la cuve dans le vide uniquement de par l'interaction de la fixation supérieure de préhension sur la fixation supérieure de cuve.

Selon un mode de réalisation, la fixation supérieure de cuve et la fixation supérieure de préhension sont agencées pour former, une fois accouplées, une liaison pivot entre la cuve de cuisson et l'interface de préhension. Autrement dit, lorsque seulement la fixation supérieure de préhension et la fixation supérieure de cuve sont accouplées, l'interface de préhension peut pivoter par rapport à la cuve de cuisson.

Selon un mode de réalisation, le mécanisme de fixation comprend :
- une fixation inférieure de cuve, embarquée sur la cuve de cuisson et agencée sur une partie inférieure de la cuve de cuisson,
- une fixation inférieure de préhension, embarquée sur l'interface de préhension et agencée pour s'accoupler de manière réversible avec la fixation inférieure de cuve.

Selon un mode de réalisation, la fixation inférieure de cuve et la fixation inférieure de préhension sont agencées pour bloquer un degré de liberté en rotation, et de préférence un degré de liberté en translation, entre la cuve de cuisson et l'interface de préhension, une fois la fixation supérieure de cuve et la fixation supérieure de préhension accouplées.

Selon un mode de réalisation :
- l'une de la fixation supérieure de cuve et de la fixation supérieure de préhension comprend une forme de réception telle qu'un crochet, un orifice, ou une forme en U,
- l'autre de la fixation supérieure de cuve et de la fixation supérieure de préhension comprend une forme mâle telle qu'un fil, une tige, un bec, ou un index, agencée pour être reçue dans la forme de réception.

Selon un mode de réalisation :
- la fixation supérieure de cuve et la fixation supérieure de préhension sont agencées pour s'accoupler lors d'une première phase d'accouplement entre la cuve de cuisson et l'interface de préhension,
- la fixation inférieure de cuve et la fixation inférieure de préhension sont agencées pour s'accoupler lors d'une deuxième phase d'accouplement entre la cuve de cuisson et l'interface de préhension. Autrement dit, l'accouplement entre la cuve de cuisson et l'interface de préhension est séquentiel : d'abord la fixation supérieure de cuve et la fixation supérieure de préhension sont accouplées, puis la fixation inférieure de cuve et la fixation inférieure de préhension sont accouplées.

Selon un mode de réalisation :
- la fixation inférieure de cuve et la fixation inférieure de préhension sont agencées pour se désaccoupler lors d'une première phase de désaccouplement entre la cuve de cuisson et l'interface de préhension,
- la fixation supérieure de cuve et la fixation supérieure de préhension sont agencées pour se désaccoupler lors d'une deuxième phase de désaccouplement entre la cuve de cuisson et l'interface de préhension. Autrement dit, le désaccouplement entre la cuve de cuisson et l'interface de préhension est séquentiel : d'abord la fixation inférieure de cuve et la fixation inférieure de préhension sont désaccouplées, puis la fixation supérieure de cuve et la fixation supérieure de préhension sont désaccouplées.

Selon un mode de réalisation, le mécanisme de fixation comprend un mécanisme de verrouillage agencé pour verrouiller de manière réversible l'interface de préhension sur la cuve de cuisson. De préférence, le mécanisme de verrouillage est agencé pour verrouiller (de manière réversible) l'interface de préhension sur la cuve de cuisson une fois que la fixation supérieure de cuve et la fixation supérieure de préhension sont accouplées.

Selon un mode de réalisation :
- l'une de la fixation inférieure de cuve et de la fixation inférieure de préhension comprend un organe de verrouillage mobile tel qu'un crochet, un orifice, une forme en U,
- l'autre de la fixation inférieure de cuve et de la fixation inférieure de préhension comprend une contreforme de verrouillage telle qu'un fil, une tige, un bec, un index, et agencée pour être verrouillée par l'organe de verrouillage mobile. Autrement dit, le mécanisme de verrouillage est agencé pour bloquer et verrouiller la fixation inférieure de cuve avec la fixation inférieure de préhension, par exemple lors de leur accouplement.

Selon un mode de réalisation, la fixation inférieure de cuve et la fixation inférieure de préhension sont agencées pour imposer :
. un mouvement de désaccouplement de la fixation inférieure de préhension présentant une composante de déplacement de désaccouplement horizontale ou dirigée vers le bas de la cuve de cuisson,
. un mouvement d'accouplement de la fixation inférieure de préhension présentant une composante de déplacement d'accouplement horizontale ou dirigée vers le haut de la cuve de cuisson.

Selon un mode de réalisation, l'organe de verrouillage mobile est agencé de telle sorte à enclencher la fixation de l'interface de préhension sur la cuve de cuisson lors de l'insertion de la cuve de cuisson dans l'espace de cuisson interne de l'appareil de préparation culinaire.

Selon un mode de réalisation :
- l'une de la fixation inférieure de cuve et de la fixation inférieure de préhension comprend une forme de réception telle qu'un crochet, un orifice, une forme en U,
- l'autre de la fixation inférieure de cuve et de la fixation inférieure de préhension comprend une forme mâle telle qu'un fil, une tige, un bec, un index, et agencée pour être reçue dans la forme de réception.

Selon un mode de réalisation, le mécanisme de verrouillage est agencé pour verrouiller une partie inférieure de la cuve de cuisson sur l'interface de préhension et/ou pour bloquer ainsi un mouvement de désaccouplement entre la fixation inférieure de cuve et la fixation inférieure de préhension.

Selon un mode de réalisation, le mécanisme de verrouillage comprend :
- un organe de verrouillage mobile, tel qu'un verrou ou un crochet,
- un organe de commande, tel qu'un bouton poussoir, relié à l'organe de verrouillage et agencé pour être commandé manuellement par un utilisateur.

Selon un mode de réalisation, l'ustensile de cuisson comprend un dispositif de détection d'accouplement, comprenant au moins un témoin d'accouplement, mobile entre :
- une position de repos, occupée lorsque la cuve de cuisson est désaccouplée de l'interface de préhension,
- une position activée, occupée lorsque la cuve de cuisson est accouplée avec l'interface de préhension. Le témoin d'accouplement permet de vérifier aisément si la cuve de cuisson et l'interface de préhension sont effectivement accouplées ou non.

Selon un mode de réalisation, le témoin d'accouplement :
- est agencé sur l'une de la cuve de cuisson et de l'interface de préhension,
- est agencé pour être déplacé vers la position activée par l'autre de la cuve de cuisson et de l'interface de préhension. Le témoin d'accouplement, prévu sur l'une de la cuve de cuisson et de l'interface de préhension, est déplacé vers la position activée par l'autre de la cuve de cuisson et de l'interface de préhension. Ainsi, le déplacement vers la position activée est effectué uniquement lors de l'accouplement.

Selon un mode de réalisation, le dispositif de détection d'accouplement comprend un organe élastique de rappel agencé pour exercer sur le témoin d'accouplement un effort de rappel vers la position de repos. Le témoin d'accouplement est rappelé automatiquement (et de manière continue) vers la position de repos : dès que l'accouplement entre la cuve de cuisson et l'interface de préhension cesse, Le témoin d'accouplement quitte la position activée et se trouve repoussé ou déplacé vers la position de repos.

Selon un mode de réalisation, le témoin d'accouplement est agencé sur l'interface de préhension, et le dispositif de détection d'accouplement comprend un organe de transmission tel qu'un culbuteur, comprenant :
- une portion d'entrée, agencée pour être actionnée par la fixation supérieure de cuve au moins lors d'une opération d'accouplement de l'interface de préhension sur la cuve de cuisson,
- une portion de sortie, engagée ou en contact avec le témoin d'accouplement. Un tel mécanisme à culbuteur est simple à réaliser et présente un fonctionnement robuste.

Selon un mode de réalisation, l'interface de préhension comprend une portion de paroi telle qu'une façade de l'appareil de préparation culinaire.

Selon un mode de réalisation, l'ustensile de cuisson comprend :
- un couvercle de cuve agencé pour coiffer ou fermer la cuve de cuisson,
- des moyens de fermeture du couvercle agencés pour interagir avec la fixation supérieure de cuve. On peut alors proposer à l'utilisateur de désaccoupler la cuve de cuisson de l'interface de préhension, et de coiffer la cuve de cuisson avec un couvercle qui peut lui-même s'accoupler avec la fixation supérieure de cuve.

Un deuxième aspect de l'invention se rapporte à un appareil de préparation culinaire, comprenant :
- un ustensile de cuisson selon le premier aspect,
- un boîtier définissant un espace de cuisson pour recevoir la cuve de cuisson de l'ustensile de cuisson,
- des moyens de cuisson.

Selon un mode de réalisation, le boîtier présente une ouverture prévue pour être fermée par la portion de paroi (la façade) de l'ustensile de cuisson, la portion de paroi étant agencée en continuité de la surface du boitier de l'appareil de préparation culinaire. Ainsi, l'accès à l'espace de cuisson de l'appareil de préparation culinaire est bloqué par l'ustensile de cuisson (par la portion de paroi formant une façade).

Selon un mode de réalisation, l'appareil de préparation culinaire comprend l'ustensile de cuisson tel que décrit précédemment et un dispositif de sécurité, comprenant un capteur de détection pour détecter le témoin d'accouplement au moins en position activée, et agencé pour autoriser un fonctionnement des moyens de cuisson uniquement si le témoin d'accouplement est détecté en position activée. Autrement dit, si la cuve de cuisson est installée dans l'appareil de préparation culinaire sans l'interface de préhension (et donc sans la portion de paroi formant la façade), le démarrage et/ou le fonctionnement de l'appareil de préparation culinaire est interdit.

### Description des figures

D'autres caractéristiques et avantages de la présente invention apparaîtront plus clairement à la lecture de la description détaillée qui suit de mode(s) de réalisation de l'invention donné(s) à titre d'exemple(s) nullement limitatif(s) et illustré(s) par les dessins annexés, dans lesquels :
[fig. 1] représente une vue en perspective d'un appareil de préparation culinaire comprenant notamment un boitier et un ustensile de cuisson ;
[fig. 2] représente une vue en perspective de l'ustensile de cuisson de la figure 1, comprenant une cuve de cuisson et une interface de préhension accouplées entre elles ;
[fig. 3] représente une vue en perspective de l'ustensile de cuisson de la figure 2 avec la cuve de cuisson et l'interface de préhension désaccouplées ;
[fig. 4] représente une vue en perspective de face de l'interface de préhension de l'ustensile de cuisson de la figure 2 ou 3 ;
[fig. 5] représente une vue en perspective arrière de l'interface de préhension de l'ustensile de cuisson de la figure 2 ou 3 ;
[fig. 6] représente une vue en perspective de dessus de la cuve de cuisson de l'ustensile de cuisson de la figure 2 ou 3 ;
[fig. 7] représente une vue en coupe de l'ustensile de cuisson de la figure 2 dans un plan parallèle au plan y-z du repère de la figure 2 ;
[fig. 8] représente une vue arrière d'une partie interne de l'interface de préhension de l'ustensile de cuisson de la figure 2 ou 3 ;
[fig. 9] représente une vue en coupe de la partie interne de l'interface de préhension de la figure 8 dans un plan de coupe II-II de la figure 8 ;
[fig. 10] représente une vue en coupe de l'interface de préhension de l'ustensile de cuisson de la figure 8 dans un plan de coupe **I-I** de la figure 8 et d'une partie du boitier de l'appareil de préparation culinaire ;
[fig. 11] représente une vue en perspective de dessus de la cuve de cuisson de l'ustensile de cuisson de la figure 2 ou 3, avec un couvercle à accoupler sur la cuve de cuisson ;
[fig. 12] représente une vue en perspective de dessus de la cuve de cuisson de l'ustensile de cuisson de la figure 2 ou 3, avec le couvercle accouplé sur la cuve de cuisson ;
[fig. 13] représente une vue schématique en coupe selon un plan parallèle au plan y-z du repère de la figure 2, de la cuve de cuisson et de l'interface de préhension de l'ustensile de cuisson de la figure 2 ou 3 avant accouplement ;
[fig. 14] représente la cuve de cuisson et l'interface de préhension de la figure 13, lors d'une première phase d'accouplement ;
[fig. 15] représente la cuve de cuisson et l'interface de préhension de la figure 13, lors d'une deuxième phase d'accouplement;
[fig. 16] représente la cuve de cuisson et l'interface de préhension de la figure 13, accouplées entre elles ;
[fig. 17] représente une première variante de réalisation de la cuve de cuisson et de l'interface de préhension de la figure 13 ;
[fig. 18] représente une deuxième variante de réalisation de la cuve de cuisson et de l'interface de préhension de la figure 13 ;
[fig. 19] représente une troisième variante de réalisation de la cuve de cuisson et de l'interface de préhension de la figure 13.

### Description détaillée de mode(s) de réalisation

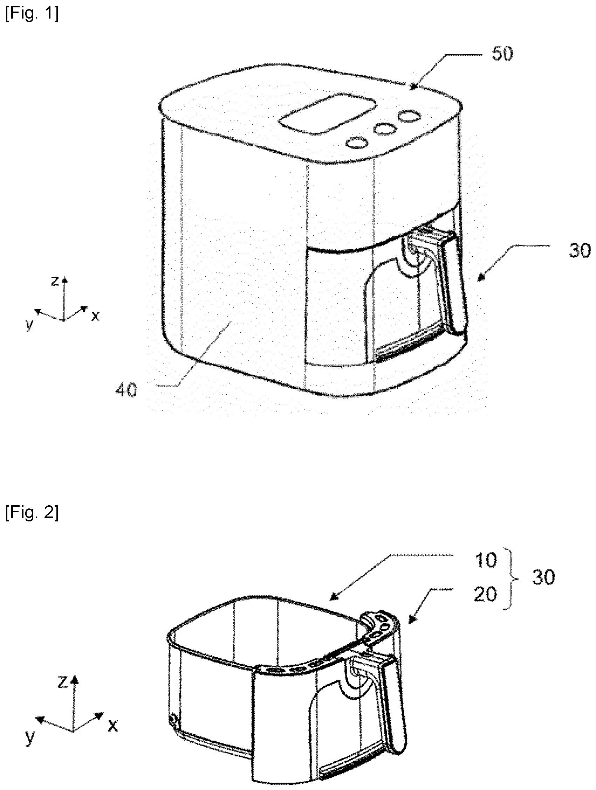

La figure 1 représente une vue en perspective d'un appareil de préparation culinaire formant dans cet exemple un appareil de préparation culinaire et comprenant notamment :
- un boitier 40,
- un ustensile de cuisson 30,
- une interface homme machine 50.

Dans l'exemple de la figure 1, l'appareil de préparation culinaire est un appareil de cuisson domestique, prévu pour cuire les aliments par rayonnement et/ou convection. On peut donc prévoir typiquement des moyens de cuisson, c'est-à-dire des moyens de chauffage et/ou des moyens de ventilation logés dans le boîtier 40. Les moyens de chauffage peuvent comprendre des moyens de chauffage par effet joule (un ou des éléments chauffants résistifs), et les moyens de ventilation peuvent comprendre un organe de ventilation tel un moto-ventilateur de manière à générer des moyens de chauffage par convection. Toutefois, on peut aussi prévoir additionnellement des moyens de chauffage par conduction, par induction, ou même par micro-ondes.

L'appareil de préparation culinaire de la figure 1 comprend typiquement au moins une unité de commande électronique et/ou des moyens de stockage d'instructions ou de commandes, et l'interface homme machine 50 permet à un utilisateur de sélectionner des recettes de cuisine, des instructions de commande, pour commander et/ou piloter l'appareil de préparation culinaire. L'interface homme machine 50 peut typiquement comprendre un écran d'affichage et/ou tactile, et des boutons de commande.

Le boîtier 40 forme une carcasse externe de l'appareil de préparation culinaire, et l'ustensile de cuisson 30 comprend une portion de paroi qui forme une façade de l'appareil de préparation culinaire, qui prolonge le boîtier 40 (les surfaces sont continues et viennent en prolongement ou en continuité les unes des autres comme on peut le voir figure 1).

Sur la figure 1, un repère cartésien x/y/z est représenté, pour définir notamment une largeur de l'appareil selon l'axe x, une profondeur de l'appareil selon l'axe y et une hauteur de l'appareil selon l'axe z. On peut noter figure 1 que l'interface homme machine 50 est agencée sur le dessus de l'appareil de préparation culinaire, mais elle pourrait être agencée sur une paroi latérale, sur la façade, ou même être (partiellement) déportée sur un appareil électronique portable.

La figure 2 représente une vue en perspective de l'ustensile de cuisson 30 de la figure 1, comprenant une cuve de cuisson 10 et une interface de préhension 20 accouplées entre elles. Dans cet exemple de réalisation, l'ustensile de cuisson 30 comprend une cuve de cuisson 10 prévue pour recevoir des aliments à cuire et à positionner dans un espace de cuisson interne et défini à l'intérieur du boîtier 40. Typiquement, lorsque l'ustensile de cuisson 30 est reçu dans l'appareil de préparation culinaire comme sur la figure 1, la cuve de cuisson 10 positionne les aliments reçus en regard des moyens de chauffage et/ou en regard des moyens de ventilation.

Sur la figure 2, la cuve de cuisson 10 est accouplée à l'interface de préhension 20 pour former un ensemble aisé à saisir et à manipuler pour un utilisateur.

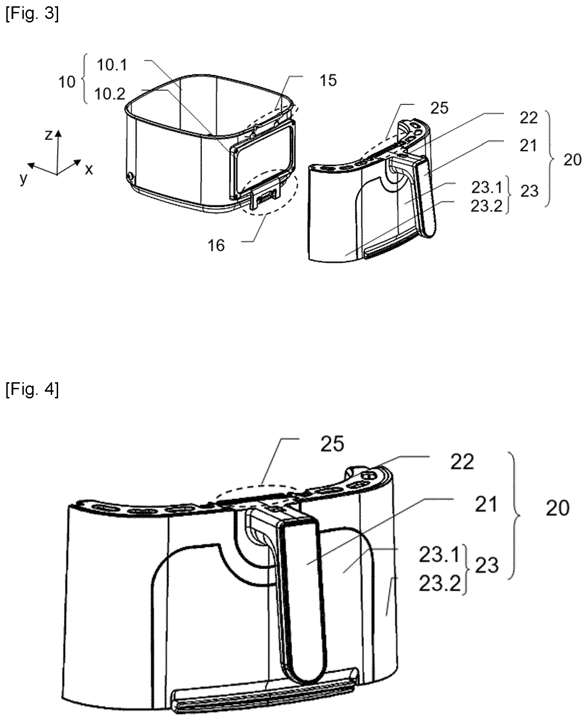

La figure 3 représente une vue en perspective de l'ustensile de cuisson 30 de la figure 2 avec la cuve de cuisson 10 et l'interface de préhension 20 désaccouplées et dissociées l'une de l'autre.

Sur cette figure 3, et sur la figure 4, on peut noter que l'interface de préhension 20 comprend :
- une poignée de préhension 21,
- un bouton de commande 22, situé en partie supérieure de la poignée de préhension 21 (selon l'axe z),
- une portion de paroi 23, comprenant une vitre transparente 23.1 et une paroi opaque 23.2,
- une fixation supérieure de préhension 25, embarquée sur l'interface de

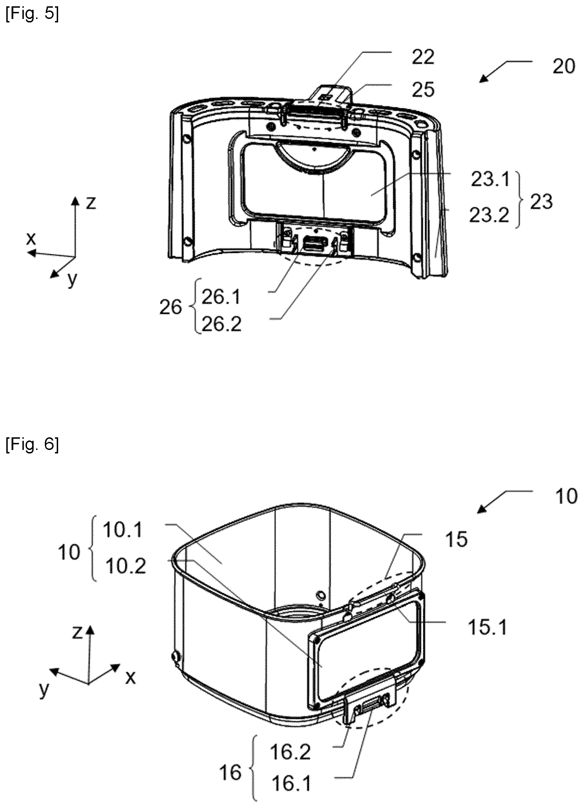

préhension 20, et située en partie supérieure de la poignée de préhension 21 (selon l'axe z), en arrière du bouton de commande 22 (selon l'axe y). Sur la figure 5, on peut noter que l'interface de préhension 20 comprend :
- le bouton de commande 22, situé en partie supérieure de la poignée de préhension 21,
- la portion de paroi 23, comprenant la vitre transparente 23.1 et la paroi opaque 23.2,
- la fixation supérieure de préhension 25, embarquée sur l'interface de préhension 20,
- une fixation inférieure de préhension 26 comprenant notamment un crochet mobile 26.1 et des crochets fixes 26.2 agencés de part et d'autre du crochet mobile 26.1 selon l'axe x.

Comme le montre la figure 3 et plus particulièrement la figure 6, la cuve de cuisson 10 comprend quant à elle :
- un corps 10.1, formant une cuve de préférence métallique,
- un hublot transparent 10.2,
- une fixation supérieure de cuve 15, embarquée sur la cuve de cuisson 10, agencée sur une partie supérieure de la cuve de cuisson 10 selon l'axe z, et comprenant notamment une tige de support 15.1,
- une fixation inférieure de cuve 16, embarquée sur la cuve de cuisson 10, agencée sur une partie inférieure de la cuve de cuisson 10 et comprenant notamment une tige de verrouillage 16.1 et des empreintes de localisation 16.2 agencées de part et d'autre de la tige de verrouillage 16.1 selon l'axe x.

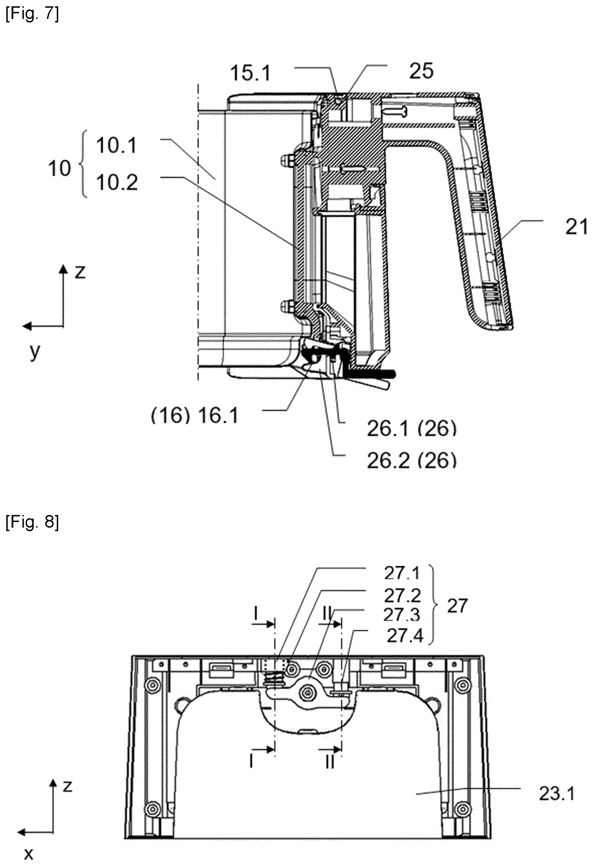

La figure 7 représente une vue en coupe de l'ustensile de cuisson 30 de la figure 2 dans un plan parallèle au plan y-z du repère de la figure 2, pour montrer la cuve de cuisson 10 accouplée avec l'interface de préhension 20.

On peut noter figure 7 que la fixation supérieure de cuve 15 et la fixation supérieure de préhension 25 sont en prise l'une avec l'autre. En particulier, la fixation supérieure de préhension 25 comprend une forme en U dirigée vers le haut selon l'axe z, qui reçoit la tige de support 15.1 disposée sur la partie supérieure de la cuve de cuisson 10 selon l'axe z. Ainsi, le poids de la cuve de cuisson 10 est repris par la fixation supérieure de préhension 25 recevant la tige de support 15.1. L'accouplement de la fixation supérieure de préhension 25 avec sa forme en U dirigée vers le haut et la tige de support 15.1 définissent ainsi une liaison pivot entre la cuve de cuisson 10 et l'interface de préhension 20.

Dans la partie inférieure de la figure 7, on peut noter que la fixation inférieure de préhension 26 est engagée avec la fixation inférieure de cuve 16. En particulier, on peut noter que les crochets fixes 26.2 sont engagés dans les empreintes de localisation 16.2 (non visibles figure 7). Par ailleurs, le crochet mobile 26.1 (en noir) est rabattu sur la tige de verrouillage 16.1. Le crochet mobile 26.1 est mobile en rotation autour d'un axe parallèle à l'axe x, comme on peut le voir figure 7, avec la silhouette du crochet mobile 26.1 décalée angulairement par rapport au crochet mobile 26.1 en noir.

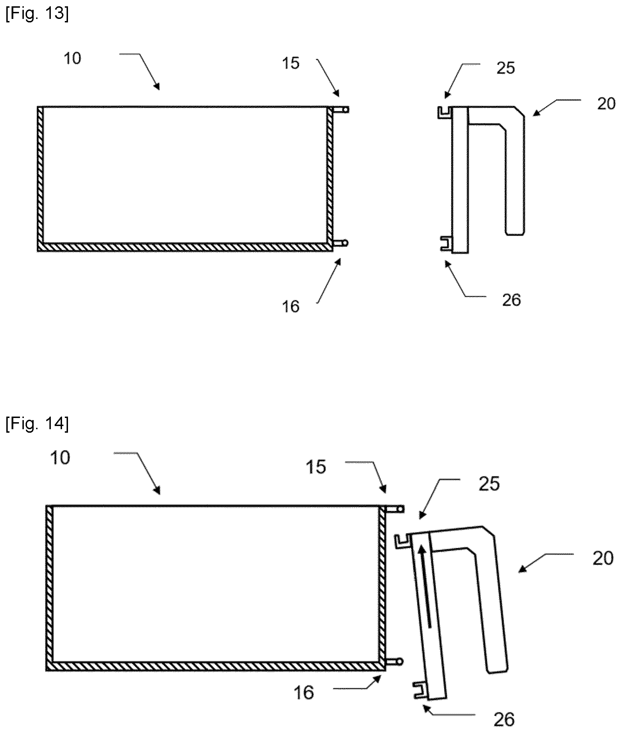

Comme le montre la figure 7 :
- le crochet mobile 26.1, engagé avec la tige de verrouillage 16.1 interdit toute rotation de l'interface de préhension 20 par rapport à la cuve de cuisson 10;
- par ailleurs, les crochets fixes 26.2 engagés dans les empreintes de localisation 16.2 limitent la translation de l'interface de préhension 20 par rapport à la cuve de cuisson 10 selon les axes x et z.
   La forme du crochet mobile 26.1 est configurée, notamment via l'inclinaison de sa rampe de frottement venant au contact de la tige de verrouillage 16.1 lors du mouvement d'accouplement de l'interface de préhension 20 sur la cuve de cuisson 10, de telle sorte à enclencher la fixation de l'interface de préhension 20 sur la cuve de cuisson 10 lors de l'insertion de la cuve de cuisson 10 dans l'espace de cuisson interne de l'appareil de préparation culinaire.
   Dans la configuration de la figure 7, l'interface de préhension 20 est verrouillée en position par rapport à la cuve de cuisson 10. Lorsque le crochet mobile 26.1 est déplacé (suite à une action de l'utilisateur sur le bouton de commande 22) et occupe la position décalée angulairement de sa silhouette figure 7, on peut déplacer l'interface de préhension 20 par rapport à la cuve de cuisson 10 dans le sens anti horaire, et ensuite dégager vers le bas la fixation supérieure de préhension 25 (et sa forme en U dirigée vers le haut) pour libérer la tige de support 15.1. La séquence d'accouplement et de désaccouplement sera expliquée plus en détail en référence aux figures 13 à 16.

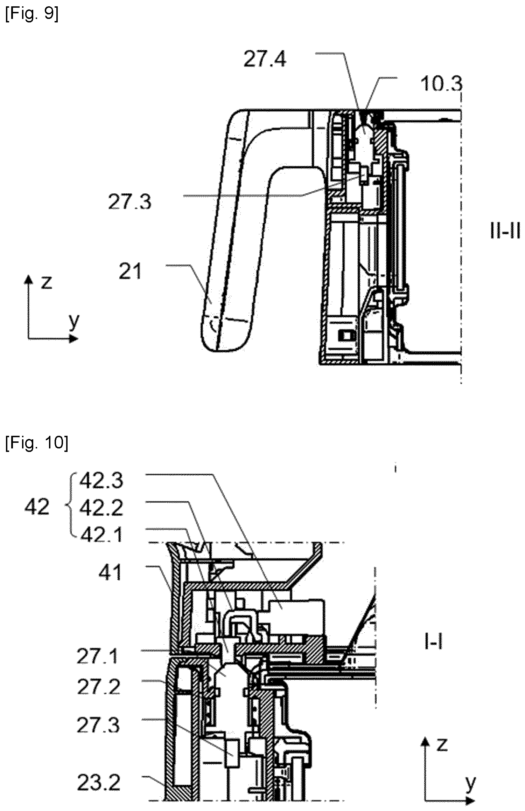

Comme le montre la figure 8, l'ustensile de cuisson 30 peut comprendre un dispositif de détection d'accouplement 27, comprenant au moins un témoin d'accouplement, 27.1 mobile entre :
- une position de repos, occupée lorsque la cuve de cuisson 10 est désaccouplée de l'interface de préhension 20,
- une position activée (celle de la figure 8 ou 10), occupée lorsque la cuve de cuisson 10 est accouplée avec l'interface de préhension 20. La figure 8 représente une vue arrière d'une partie interne de l'interface de préhension 20 de la figure 2 ou 3 pour bien montrer le dispositif de détection d'accouplement 27, comprenant :
- le témoin d'accouplement, 27.1,
- un culbuteur 27.3, pivotant autour d'un axe de culbuteur,
- un piston de commande 27.4, agencé pour être actionné par un organe de détrompage 10.3 solidaire de la cuve de cuisson 10, et éventuellement.
- un ressort de rappel 27.2, prévu pour ramener le témoin d'accouplement, 27.1 vers le bas (selon l'axe z).

Le ressort de rappel 27.2 n'est pas indispensable et il n'est pas gênant que le témoin d'accouplement 27.1 occupe une position quelconque entre la position activée et la position de repos lorsque la cuve de cuisson 10 est désaccouplée de l'interface de préhension 20.

La figure 9 représente une vue en coupe de l'ustensile de cuisson 30 de la figure 8 dans un plan de coupe II-II de la figure 8. On peut noter que l'organe de détrompage 10.3 agit sur le piston de commande 27.4 (en le poussant vers le bas), qui agit à son tour sur le culbuteur 27.3.

La figure 10 représente une vue en coupe de l'ustensile de cuisson 30 de la figure 8 dans un plan de coupe I-I de la figure 8. On peut noter que le culbuteur 27.3 (poussé comme le montre la figure 9 par le piston de commande 27.4 et l'organe de détrompage 10.3) pousse vers le haut le témoin d'accouplement 27.1 malgré le ressort de rappel 27.2. En conséquence, un détecteur d'accouplement 42 (comprenant une touche de palpage 42.1, un levier de renvoi 42.2 et un interrupteur de détection 42.3), logé derrière une paroi 41 du boîtier 40, peut détecter que la cuve de cuisson 10 est effectivement bien accouplée avec l'interface de préhension 20.

L'interface de préhension 20 peut présenter une encoche sur sa face arrière pour permettre le passage de la touche de palpage 42.1 en vue de son alignement avec témoin d'accouplement 27.1 lors de l'insertion de l'ustensile de cuisson (cuve de cuisson 10 et interface de préhension 20) dans l'appareil de préparation culinaire.

Un tel dispositif de détection d'accouplement 27 peut faire partie d'un dispositif de sécurité pour permettre de détecter que la cuve de cuisson 10 est bien accouplée avec l'interface de préhension 20 avant de lancer un démarrage de l'appareil de préparation culinaire. En particulier, l'unité de commande de l'appareil de préparation culinaire peut interdire toute opération ou tout fonctionnement de l'appareil de préparation culinaire (et en particulier l'activation des moyens de chauffage et/ou de ventilation) si la cuve de cuisson 10 n'est pas accouplée avec l'interface de préhension 20. En effet, si la cuve de cuisson 10 non accouplée avec l'interface de préhension 20 est tout de même installée dans le boitier 40, la façade de l'appareil de préparation culinaire (la portion de paroi 23, comprenant la vitre transparente 23.1, la paroi opaque 23.2, et embarquée sur l'interface de préhension 20) sera absente et le fonctionnement ne serait pas sécurisé.

De la même manière, si la façade de l'appareil de préparation culinaire est tout de même installée sur l'appareil mais que la cuve de cuisson est absente alors l'unité de commande de l'appareil de préparation culinaire peut interdire toute opération ou tout fonctionnement de l'appareil de préparation culinaire.

En outre, l'organe de détrompage 10.3 peut comprendre la tige de support 15.1, si bien que lorsque la fixation supérieure de cuve 15 et la fixation supérieure de préhension 25 sont en prise l'une avec l'autre alors le piston de commande 27.4 est poussé vers le bas et sous l'action du culbuteur 27.3 le témoin d'accouplement 27.1 est repoussé vers le haut.

Dans ce cas, la fixation supérieure de préhension 25 de l'interface de préhension 20 comprend une gorge de réception de la tige de support 15.1 et le piston de commande 27.4, dans sa position haute, débouche dans cette gorge sans pour autant dépasser au-delà de la hauteur de l'interface de préhension 20.

La tige de support 15.1 peut également être légèrement excentrée en direction du piston de commande 27.4 afin de permettre d'actionner le piston de commande 27.4 sans pour autant gêner au mouvement du témoin d'accouplement 27.1.

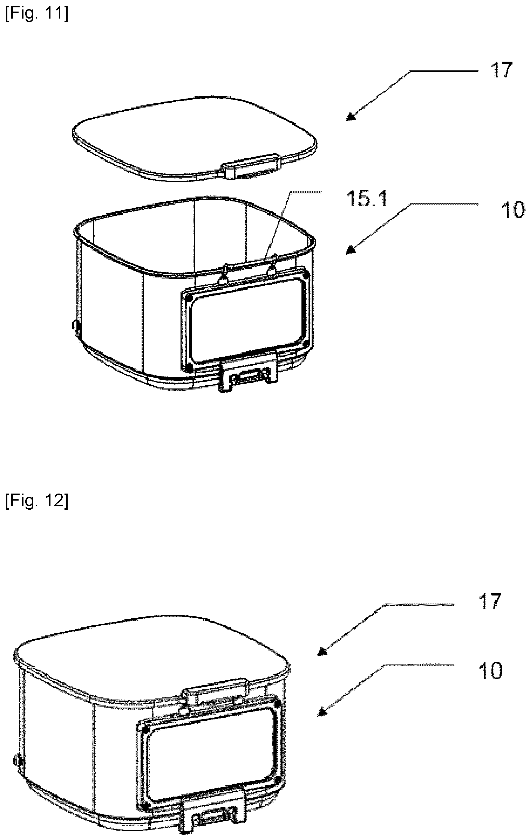

La figure 11 représente une vue en perspective de dessus de la cuve de cuisson 10 de la figure 2 ou 3, avec un couvercle 17 à accoupler sur la cuve de cuisson 10. La figure 12 représente une vue en perspective de dessus de la cuve de cuisson 10 de la figure 2 ou 3, avec le couvercle 17 accouplé sur la cuve de cuisson 10. On peut noter que le couvercle 17 comprend une portion d'accouplement destinée à s'accoupler avec la tige de support 15.1, par exemple par emboîtement élastique (clipsage). Ainsi, le couvercle 17 est parfaitement maintenu sur la cuve de cuisson 10.

La figure 13 représente une vue schématique en coupe de la cuve de cuisson 10 et de l'interface de préhension 20 de la figure 2 ou 3 avant accouplement, selon un plan parallèle au plan y-z du repère de la figure 2. On peut noter et garder en mémoire que :
- la fixation supérieure de cuve 15 comprend notamment une tige de support 15.1 et se trouve en regard figure 13 de la fixation supérieure de préhension 25 qui comprend notamment une forme en U orientée vers le haut
- la fixation inférieure de cuve 16 comprend notamment la tige de verrouillage 16.1 et se trouve en regard figure 13 de la fixation inférieure de préhension 26 qui comprend notamment un crochet mobile 26.1 et des crochets fixes 26.2.

La figure 14 représente la cuve de cuisson 10 et l'interface de préhension 20 de la figure 13, lors d'une première phase d'accouplement, au cours de laquelle :
- l'interface de préhension 20 est préalablement déplacée vers le bas, et
- la fixation supérieure de préhension 25 (qui comprend notamment une forme en U orientée vers le haut) est ensuite déplacée vers le haut pour engager la tige de support de la fixation supérieure de cuve 15 dans la forme en U de la fixation supérieure de préhension 25.

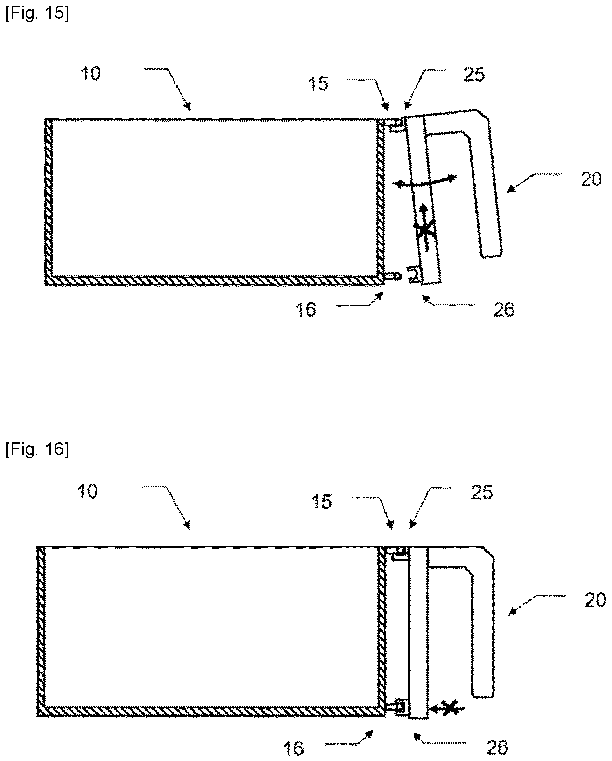

La figure 15 représente la cuve de cuisson 10 et l'interface de préhension 20 de la figure 13, lors d'une deuxième phase d'accouplement, au cours de laquelle :
- la première phase d'accouplement est terminée, si bien que la forme en U de la fixation supérieure de préhension 25 reçoit la tige de support de la fixation supérieure de cuve 15 de sorte à assurer une liaison pivot entre la cuve de cuisson 10 et l'interface de préhension 20,
- plus aucun mouvement vers le haut de la fixation supérieure de préhension 25 par rapport à la fixation supérieure de cuve 15 n'est possible,
- un pivotement entre la cuve de cuisson 10 et l'interface de préhension 20 est possible, notamment pour approcher la fixation inférieure de cuve 16 de la fixation inférieure de préhension 26.

La figure 16 représente la cuve de cuisson 10 et l'interface de préhension 20 de la figure 13, accouplées entre elles. En effet, la deuxième phase d'accouplement est terminée, avec la mise en contact entre la fixation inférieure de cuve 16 et la fixation inférieure de préhension 26. Le crochet mobile 26.1 (visible notamment figure 7) a pu pivoter et s'engager sur la tige de verrouillage 16.1, si bien qu'aucun mouvement relatif entre la cuve de cuisson 10 et l'interface de préhension 20 n'est possible.

Pour désaccoupler la cuve de cuisson 10 et l'interface de préhension 20, il suffit d'actionner le bouton de commande 22 pour faire pivoter le crochet mobile 26.1 et pouvoir dégager la fixation inférieure de cuve 16 de la fixation inférieure de préhension 26 par un mouvement de rotation relatif, et ensuite déplacer l'interface de préhension 20 vers le bas de la cuve de cuisson 10 pour dégager la forme en U de la fixation supérieure de préhension de la tige de support de la fixation supérieure de cuve 15.

On peut noter que si l'utilisateur actionne involontairement le bouton de commande 22 alors qu'il tient normalement l'ustensile de cuisson 30 par l'interface de préhension 20, la cuve de cuisson 10 ne se détachera pas, car le propre poids de la cuve de cuisson 10 :
- force la tige de support 15.1 à rester dans la forme en U de la fixation supérieure de préhension 25, et
- maintient les crochets fixes 26.2 en appui sur la cuve de cuisson 10. En conséquence, l'ustensile de cuisson 30 est simple à manipuler, l'accouplement ou le désaccouplement entre l'interface de préhension 20 et la cuve de cuisson 10 est aisé, la sécurité d'utilisation est garantie en supprimant les risques de détachement intempestifs, même si l'utilisateur actionne par mégarde le bouton de commande 22.

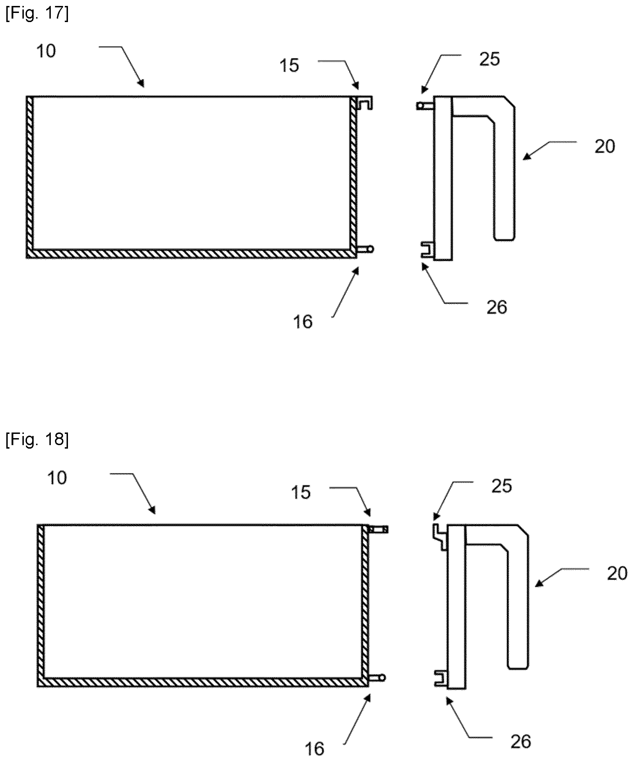

La figure 17 représente une première variante de réalisation de la cuve de cuisson et de l'interface de préhension de la figure 13, dans laquelle :
- la fixation supérieure de cuve 15 comprend notamment une forme en U orientée vers le bas qui se trouve en regard figure 17 de la fixation supérieure de préhension 25 qui comprend notamment une tige de support,
- de la même manière que sur la figure 13, la fixation inférieure de cuve 16 comprend notamment la tige de verrouillage 16.1 et se trouve en regard figure 17 de la fixation inférieure de préhension 26 qui comprend notamment le crochet mobile 26.1 et les crochets fixes 26.2. Ainsi, comme pour l'ustensile de cuisson 30 de la figure 13, la fixation supérieure de cuve 15 et la fixation supérieure de préhension 25 de la première variante de réalisation sont agencées pour imposer :
   . un mouvement de désaccouplement de la fixation supérieure de préhension 25 présentant une composante de déplacement de désaccouplement dirigée vers le bas de la cuve de cuisson 10,
   . un mouvement d'accouplement de la fixation supérieure de préhension 25 présentant une composante de déplacement d'accouplement dirigée vers le haut de la cuve de cuisson 10.

La figure 18 représente une deuxième variante de réalisation de la cuve de cuisson et de l'interface de préhension de la figure 13, dans laquelle :
- la fixation supérieure de cuve 15 comprend notamment un anneau de support qui se trouve en regard figure 18 de la fixation supérieure de préhension 25 qui comprend notamment un index orienté vers le haut,
- de la même manière que sur la figure 13, la fixation inférieure de cuve 16 comprend notamment la tige de verrouillage 16.1 et se trouve en regard figure 18 de la fixation inférieure de préhension 26 qui comprend notamment le crochet mobile 26.1 et les crochets fixes 26.2. Ainsi, comme pour l'ustensile de cuisson 30 de la figure 13, la fixation supérieure de cuve 15 et la fixation supérieure de préhension 25 de la deuxième variante de réalisation sont agencées pour imposer :
   - un mouvement de désaccouplement de la fixation supérieure de préhension 25 présentant une composante de déplacement de désaccouplement dirigée vers le bas de la cuve de cuisson 10,
   - un mouvement d'accouplement de la fixation supérieure de préhension 25 présentant une composante de déplacement d'accouplement dirigée vers le haut de la cuve de cuisson 10.

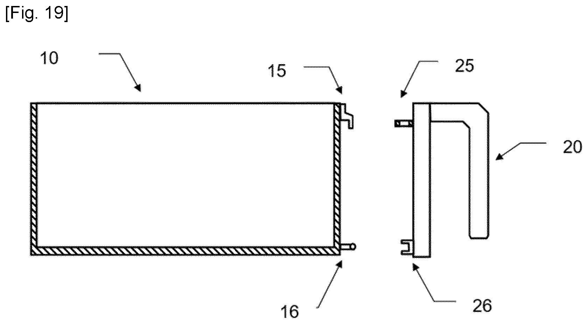

La figure 19 représente une troisième variante de réalisation de la cuve de cuisson et de l'interface de préhension de la figure 13, dans laquelle :
- la fixation supérieure de cuve 15 comprend notamment un index orienté vers le bas qui se trouve en regard figure 19 de la fixation supérieure de préhension 25 qui comprend notamment un anneau de support,
- de la même manière que sur la figure 13, la fixation inférieure de cuve 16 comprend notamment la tige de verrouillage 16.1 et se trouve en regard figure 19 de la fixation inférieure de préhension 26 qui comprend notamment le crochet mobile 26.1 et les crochets fixes 26.2. Ainsi, comme pour l'ustensile de cuisson 30 de la figure 13, la fixation supérieure de cuve 15 et la fixation supérieure de préhension 25 de la troisième variante de réalisation sont agencées pour imposer :
   . un mouvement de désaccouplement de la fixation supérieure de préhension 25 présentant une composante de déplacement de désaccouplement dirigée vers le bas de la cuve de cuisson 10,
   . un mouvement d'accouplement de la fixation supérieure de préhension 25 présentant une composante de déplacement d'accouplement dirigée vers le haut de la cuve de cuisson 10.

### Application industrielle

Un ustensile de cuisson selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut prévoir d'autres mises en œuvre structurelles pour verrouiller la cuve de cuisson et l'interface de préhension : une goupille mobile, un anti-retour élastique, un clipsage...

En ce qui concerne la détection de l'accouplement, on peut prévoir que la face arrière de l'interface de préhension vienne appuyer sur un piston à bascule en forme de L se trouvant sur la face avant de la cuve de manière à activer un switch disposé sur l'appareil.

En ce qui concerne la détection de l'accouplement, on peut prévoir toute sorte de mécanisme de transmission pour déplacer le témoin d'accouplement : un culbuteur comme dans l'exemple donné, mais on peut prévoir une bielle, un levier, une came, une piste de came, le capteur solidaire du boîtier peut même être agencé pour détecter directement la portion de paroi embarquée sur l'interface de préhension.

## Revendications

1. Ustensile de cuisson (30) pour un appareil de préparation culinaire, comprenant au moins :
- une cuve de cuisson (10), agencée pour recevoir des aliments à préparer et agencée pour être reçue dans un espace de cuisson interne de l'appareil de préparation culinaire,
- une interface de préhension (20), agencée pour être fixée de manière réversible sur la cuve de cuisson (10),
- un mécanisme de fixation, comprenant au moins :
. une fixation supérieure de cuve (15), embarquée sur la cuve de cuisson (10) et agencée sur une partie supérieure de la cuve de cuisson (10),
. une fixation supérieure de préhension (25), embarquée sur l'interface de préhension (20) et agencée pour s'accoupler de manière réversible avec la fixation supérieure de cuve (15),
- des moyens de cuisson comprenant des moyens de chauffage disposés entre un organe de ventilation et l'espace de cuisson, **caractérisé en ce que** la fixation supérieure de cuve (15) et la fixation supérieure de préhension (25) sont agencées pour imposer :
. un mouvement de désaccouplement de la fixation supérieure de préhension (25) présentant une composante de déplacement de désaccouplement dirigée vers le bas de la cuve de cuisson (10), et/ou
. un mouvement d'accouplement de la fixation supérieure de préhension (25) présentant une composante de déplacement d'accouplement dirigée vers le haut de la cuve de cuisson (10).

2. Ustensile de cuisson (30) selon la revendication 1, dans lequel la fixation supérieure de cuve (15) et la fixation supérieure de préhension (25) sont agencées pour former, une fois accouplées, une liaison pivot entre la cuve de cuisson (10) et l'interface de préhension (20).

3. Ustensile de cuisson (30) selon l'une des revendications 1 à 2, dans lequel le mécanisme de fixation comprend :
. une fixation inférieure de cuve (16), embarquée sur la cuve de cuisson (10) et agencée sur une partie inférieure de la cuve de cuisson (10),
. une fixation inférieure de préhension (26), embarquée sur l'interface de préhension (20) et agencée pour s'accoupler de manière réversible avec la fixation inférieure de cuve (16).

4. Ustensile de cuisson (30) selon la revendication 3, dans lequel la fixation inférieure de cuve (16) et la fixation inférieure de préhension (26) sont agencées pour bloquer un degré de liberté en rotation, et de préférence un degré de liberté en translation, entre la cuve de cuisson (10) et l'interface de préhension (20), une fois la fixation supérieure de cuve (15) et la fixation supérieure de préhension (25) accouplées.

5. Ustensile de cuisson (30) selon l'une des revendications 1 à 4, dans lequel le mécanisme de fixation comprend un mécanisme de verrouillage agencé pour verrouiller de manière réversible l'interface de préhension (20) sur la cuve de cuisson (10).

6. Ustensile de cuisson (30) selon la revendication 5 dans sa dépendance à la revendication 3 ou 4, dans lequel :
- l'une de la fixation inférieure de cuve (16) et de la fixation inférieure de préhension (26) comprend un organe de verrouillage mobile tel qu'un crochet, un orifice, une forme en U,
- l'autre de la fixation inférieure de cuve (16) et de la fixation inférieure de préhension (26) comprend une contreforme de verrouillage telle qu'un fil, une tige, un bec, un index, et agencée pour être verrouillée par l'organe de verrouillage mobile.

7. Ustensile de cuisson (30) selon l'une des revendications 1 à 6, comprenant un dispositif de détection d'accouplement, comprenant au moins un témoin d'accouplement (27.1), mobile entre :
- une position de repos, occupée lorsque la cuve de cuisson (10) est désaccouplée de l'interface de préhension (20),
- une position activée, occupée lorsque la cuve de cuisson (10) est accouplée avec l'interface de préhension (20).

8. Ustensile de cuisson (30) selon la revendication 7, dans lequel le témoin d'accouplement (27.1) :
- est agencé sur l'une de la cuve de cuisson (10) et de l'interface de préhension (20),
- est agencé pour être déplacé vers la position activée par l'autre de la cuve de cuisson (10) et de l'interface de préhension (20).

9. Ustensile de cuisson (30) selon l'une des revendications 7 ou 8, dans lequel le dispositif de détection d'accouplement comprend un organe élastique de rappel agencé pour exercer sur le témoin d'accouplement (27.1) un effort de rappel vers la position de repos.

10. Ustensile de cuisson (30) selon l'une des revendications 7 à 9, dans lequel le témoin d'accouplement (27.1) est agencé sur l'interface de préhension (20), et dans lequel le dispositif de détection d'accouplement comprend un organe de transmission tel qu'un culbuteur (27.3), comprenant :
- une portion d'entrée, agencée pour être actionnée par la fixation supérieure de cuve (15) au moins lors d'une opération d'accouplement de l'interface de préhension (20) sur la cuve de cuisson (10),
- une portion de sortie, engagée ou en contact avec le témoin d'accouplement (27.1).

11. Ustensile de cuisson (30) selon l'une des revendications 1 à 10, dans lequel l'interface de préhension (20) comprend une portion de paroi (23) telle qu'une façade de l'appareil de préparation culinaire.

12. Ustensile de cuisson (30) selon l'une des revendications 1 à 11, comprenant :
- un couvercle de cuve agencé pour coiffer ou fermer la cuve de cuisson (10),
- des moyens de fermeture du couvercle agencés pour interagir avec la fixation supérieure de cuve (15).

13. Appareil de préparation culinaire, comprenant :
- un ustensile de cuisson (30) selon l'une des revendications 1 à 12,
- un boîtier (40) définissant un espace de cuisson pour recevoir la cuve de cuisson (10) de l'ustensile de cuisson (30),
- des moyens de cuisson.

14. Appareil de préparation culinaire selon la revendication 13, comprenant l'ustensile de cuisson (30) selon la revendication 11, dans lequel le boîtier (40) présente une ouverture prévue pour être fermée par la façade de l'ustensile de cuisson (30), la portion de paroi (23) étant agencée en continuité de la surface du boitier de l'appareil de préparation culinaire.

15. Appareil de préparation culinaire selon la revendication 13 ou 14, comprenant :
- l'ustensile de cuisson (30) selon l'une des revendications 7 à 10,
- un dispositif de sécurité, comprenant un capteur de détection pour détecter le témoin d'accouplement (27.1) au moins en position activée, et agencé pour autoriser un fonctionnement des moyens de cuisson uniquement si le témoin d'accouplement (27.1) est détecté en position activée.
